# EUROPEAN PATENT APPLICATION

(11) **EP 1 942 328 A2**
(43) Date of publication of application: **09.07.2008**
(21) Application number: 08100115.8
(22) Date of filing: 04.01.2008
(51) Int. Cl.: G01M 3/28

(54) **Airtight tester**

(30) Priority: 05.01.2007 TW 96200269 U
(71) Applicant: SmartAnt Telecom Co., Ltd., Jhudong Township Hsinchu County (TW)
(72) Inventor: HSU, Yung-Ming, Hsinchu County (TW)
(74) Representative: Cabinet Plasseraud

(57) **Abstract**

An airtight tester is used to test air tightness at a testing position of an object to be tested. The airtight tester includes a base, a leakage-test pipe, a moving unit, and a detector. The leakage-test pipe is connected to a pressure source, such that the pressure source may output a pressure to the leakage-test pipe. When the leakage-test pipe covers at the testing position of the object, the moving unit is pressed at an outer edge of the leakage-test pipe, so that the leakage-test pipe is jointed to a surface of the object, and thus, the detector detects the pressure state of the leakage-test pipe. Therefore, the testing staff obtains the air tightness of the object through an output message of the detector, and thus strengthening the structure of the object through utilizing the information.

## Description

### CROSS-REFERENCE TO RELATED APPLICATIONS

**This non-provisional application claims priority under 35 U.S.C. § 119(a) on Patent Application No(s).** 096200269 **filed in Taiwan, R.O.C. on January 5, 2007, the entire contents of which are hereby incorporated by reference.**

### BACKGROUND OF THE INVENTION

### Field of the Invention

The present invention relates to an airtight tester. More particularly, the present invention relates to an airtight tester capable of performing airtight test on a single part of an object to be tested.

### Related Art

Electronic products, for example, personal digital assistances (PDAs), GPS navigators, cell phones, and outdoor antennas are generally used by users under awful natural environment or unstable outdoor environment. Under such environments, dusts and moistures usually may cause damage to the electronic products. Therefore, the electronic products must correspondingly have good dustproof and waterproof effects, such that when the electronic product is used under such environments, dusts or moistures may not intrude into the electronic product to damage electronic parts.

However, when the electronic product is manufactured, due to factors of the manufacturing process, a wrapping layer may have slits on the surface, or gaps may be left between pins of the electronic part and the main body, such that the electronic product lost the leakage-proof function. The slits or gaps formed on the electronic part are rather tiny, which are difficult to be perceived with naked eyes. As for machine designers or quality management staff, if a thorough verification is performed one by one, it may cost a great number of time and energy, which does not conform to the cost-effective rules. Therefore, the safety of electronic parts may be evaluated through safe code, for example, IEC Code issued by International Electrotechnical Commission, and in the EN Code issued by European Committee for Standardization (CEN) and European Committee for Electrotechnical Standardization (CENELEC), the method of testing dustproof and waterproof performances for the machine-protection construction is expressly regulated. Taking IP67 as an example, a first number "6" of the IP mark refers to a complete dust-proofing construction, and a corresponding testing condition is that any dust cannot intrude therein, and a second number "7" of the IP mark refers that it can be used under water with certain pre-conditions, and a corresponding testing condition is that the product will not lose functions when being immersed at a depth of 1 meter under water for 30 minutes.

Once the manufacturer sends the products to the verification staff, the verification staff performs tests about dust proof and water proof performances according to the IEC Code and EN Code. However, the manufacturer can merely know whether the products have passed the test or not, but cannot further know the status of the products generated during the testing process.

Furthermore, when the airtight test is performed on an object to be tested, the object to be tested is put into a testing slot of a testing table, and a vacuum pumping test is performed on the testing slot by using a vacuum pump, thereby recognizing the leakage-proof function of the object to be tested within the testing slot, for example, a leakage proof tester for keyboard has been disclosed in Taiwan Patent No. 481272. However, the prior art aims at testing the leakage-proof function of the whole object to be tested. When the quality management staff only intends to test a single part of the object to be tested, for example, the position between the pins of the electronic part and the main body in the object to be tested, it cannot be tested through the conventional testing table.

### SUMMARY OF THE INVENTION

With the above conventional art, the manufacturer cannot know the circumstances generated to the products during the testing process, so it cannot conduct further research and development for improving the products based upon the information of the testing process. In addition, the conventional art aims at testing the leakage-proof function of the whole object to be tested, if it intends to test a single part of the object to be tested, it cannot be achieved through the conventional testing table. Accordingly, the present invention is directed to an airtight tester, which is capable of observing the testing process of the object to be tested, and testing a single part of the object to be tested.

The present invention provides an airtight tester, applicable for testing air tightness at a testing position of an object to be tested. The airtight tester includes a base, a leakage-test pipe, a moving unit, and a detector. The object to be tested is placed on the base, so as to be covered by the leakage-test pipe at the testing position. The leakage-test pipe has an accommodation chamber and an opening. The accommodation chamber is connected to a gas piping, and the gas piping is connected to a pressure source for outputting a pressure to the accommodation chamber. The moving unit is disposed on the base and pressed at an outer edge of the leakage-test pipe, such that the accommodation chamber is jointed to a surface of the object to be tested. The detector is connected to the leakage-test pipe and the pressure source through the gas piping, for detecting a pressure state within the accommodation chamber.

The present invention of the airtight tester, the testing staff directly observes the bearing capability of the object to be tested during the overall airtight testing process, which is convenient for the testing staff to analyze or adjust the testing status. As compared with the conventional art that the test result can only be known indirectly, the present invention enables the testing staff to master the whole testing process according to the test requirements, and meanwhile to obtain more direct and detailed test information. In addition, the leakage-test pipe adopts a hand-held design. As for the testing staff, if it intends to test a single part of the object to be tested, the testing position of the object to be tested may be selected, and meanwhile the leakage-test pipe directly covers thereon, for example, the position where the pins and the main body of the object to be tested are jointed together, so as to perform the airtight test. Therefore, the testing staff can change the position covered by the leakage-test pipe according to the testing requirements, and thus, the present invention has a higher operating flexibility in application and can be easily operated.

### BRIEF DESCRIPTION OF THE DRAWINGS

The present invention will become more fully understood from the detailed description given herein below for illustration only, which thus is not limitative of the present invention, and wherein:
FIG. 1 is a perspective view of an embodiment of the present invention;
FIG. 2 shows a state that a moving unit is not pressed at a leakage-test pipe yet when an outdoor antenna is tested according to an embodiment of the present invention;
FIG. 3 shows a state that the moving unit is pressed at the leakage-test pipe when the outdoor antenna is tested according to an embodiment of the present invention;
FIG. 4 is a schematic view that a pressure source outputs a positive pressure to an accommodation chamber to perform the airtight test on the outdoor antenna according to an embodiment of the present invention; and
FIG. 5 shows a state that the airtight function of the outdoor antenna is tested to be unqualified according to an embodiment of the present invention.

### DETAILED DESCRIPTION OF THE INVENTION

In order to make the objective, structure, feature, and function of the present invention be more comprehensible, a detailed description is given below through embodiments.

The present invention of the airtight tester is used to test the air tightness of an object to be tested. The object is, but not limited to, an outdoor antenna, a PDA, a GPS navigator, a cell phone, or other electronic products. For example, products meeting dustproof and waterproof performance level IP67 may also apply the technique provided by the present invention. In the embodiments of the present invention, the outdoor antenna is taken as an application embodiment of the object to be tested.

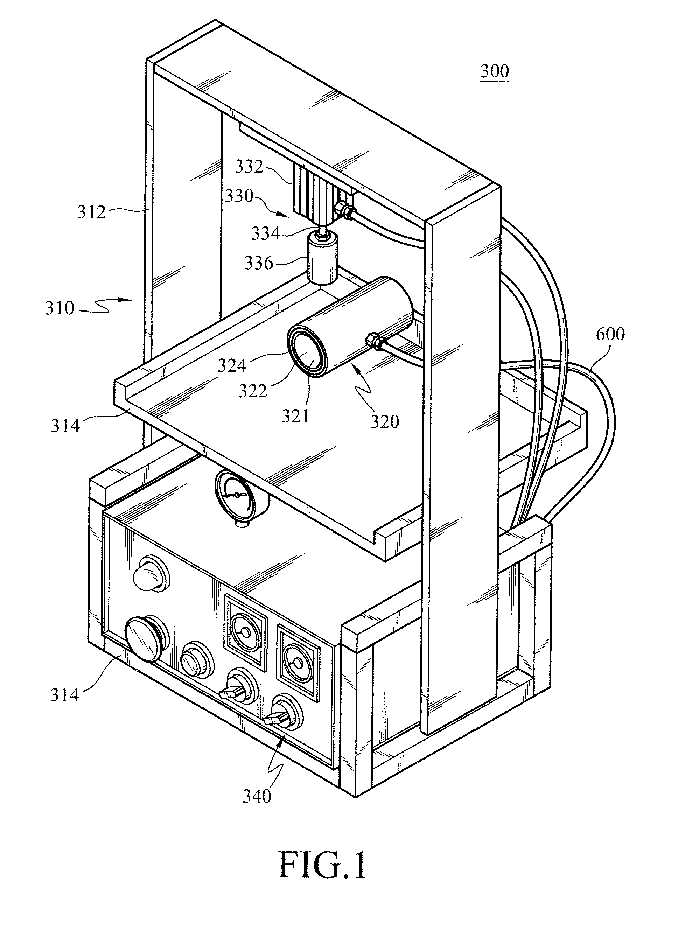

Referring to FIGs. 1, 2, and 4, an airtight tester 300 is manufactured according to the IP67 Code, but may also be manufactured according to a specification required by the customer. Here, the airtight tester 300 manufactured according to the IP67 Code is taken as an application embodiment herein. An outdoor antenna 500 includes a main body 510 and a plurality of signal pins 520. During the manufacturing process, when the signal pins 520 are jointed to the main body 510, a tolerance problem may occur, and as a result, slits are formed at the jointing position between the signal pins 520 and the main body 510. In order to ensure the product quality of the outdoor antenna 500, the airtight tester 300 may be used to test the air tightness at, for example, the jointing position between the signal pins 520 and the main body 510, but the testing position is not limited to this.

The airtight tester 300 includes a base 310, a leakage-test pipe 320, a moving unit 330, and a detector 340, in which the base 310 includes a frame 312 and a plurality of stages 314 disposed on the frame 312, and the stages 314 are used to carry the outdoor antenna 500 and the detector 340, so as to perform the testing operation and observing the test data.

The leakage-test pipe 320 is made by a pressure tight material, one end is an open end, so as to have an opening 321, and the other end is a closed end. The leakage-test pipe 320 has an accommodation chamber 322 connected to a gas piping 600, and the gas piping 600 is connected to a pressure source 700 for outputting a pressure to the accommodation chamber 322. According to the testing staffs requirements, the pressure source 700 can output the pressure, so as to enable the pressure within the accommodation chamber 322 to reach a predetermined pressure required by the testing staff. The pressure source 700 may include a pressure generator 720 and a control valve 740 etc.. The pressure generator 720 is connected to the control valve 740 through the gas piping 600, and the control valve 740 is connected to the accommodation chamber 322 of the leakage-test pipe 320 through the gas piping 600, so as to form a gas path. The ON or OFF of the control valve 740 determines whether the gas can flow or not. When the pressure generator 720 outputs the pressure, the control valve 740 is ON, so that the gas freely passes through to enter the accommodation chamber 322. When the pressure generator 720 is turned off, at this time, the control value 740 is OFF, so as to cut off the gas path within the pressure generator 720 and the accommodation chamber 322, and thus avoid influencing the pressure testing result of the outdoor antenna 500.

In addition, the pressure generator 720 is, for example, a booster pump, so as to generator the positive pressure to input gas into the accommodation chamber 322 of the leakage-test pipe 320, but the pressure generator 720 is not limited to a booster pump, but may be for example a vacuum pump for generating a negative pressure to pump the gas from the accommodation chamber. Here, the pressure source 700 outputting the positive pressure is taken as an application embodiment of the present invention. Furthermore, a washer 324 is disposed on the leakage-test pipe 320, for tightly jointing to a surface of the outdoor antenna 500. Therefore, during the process of testing the outdoor antenna 500, the accommodation chamber 322 of the leakage-test pipe 320 is a closed space, such that neither the environmental gas can enter into the accommodation chamber 322 nor the gas within the accommodation chamber 322 can escape into the external environment, so as to successfully perform the testing operation on the outdoor antenna 500.

The moving unit 330 is disposed on the base 310 corresponding to the position of the leakage-test pipe 320, and includes an actuator 332, a connecting lever 334, and a pressing block 336. The actuator 332 is disposed on the frame 312 of the base 310, two ends of the connecting lever 334 are respectively connected to the actuator 332 and the pressing block 336, and the actuator 332 can output power for moving the pressing block 336, so as to make the pressing block 336 move up and down along an axial direction of the leakage-test pipe 320. Here, in the application embodiment, the actuator 332 of the present invention is located on the top of the base 310, but it is not limited thereby.

The detector 340 is disposed on one of the stages 314 of the base 310, and connected to the leakage-test pipe 320 through a gas piping 600A, so as to be communicated with the accommodation chamber 320 through the gas piping 600. In this manner, when the outdoor antenna 500 is located within the accommodation chamber 320 to be tested, the detector 340 may be used to detect the pressure state within the accommodation chamber 320. In addition, the detector 340 further includes a control module for setting a pressure changing threshold of a pressure changing speed according to the requirements on the air tightness performance of the outdoor antenna 500. When the pressure changing speed as the time elapsed is smaller than the pressure changing threshold, it indicates that the tightness of the outdoor antenna 500 can satisfy the requirement of IP67 Code. At this time, the control module outputs a result signal indicating the testing success. Furthermore, when the pressure changing speed as the time elapsed is greater than the pressure changing threshold, it indicates that the air tightness of the outdoor antenna 500 does not satisfy the airtight requirements, and meanwhile the control module outputs a result signal indicating the testing failure.

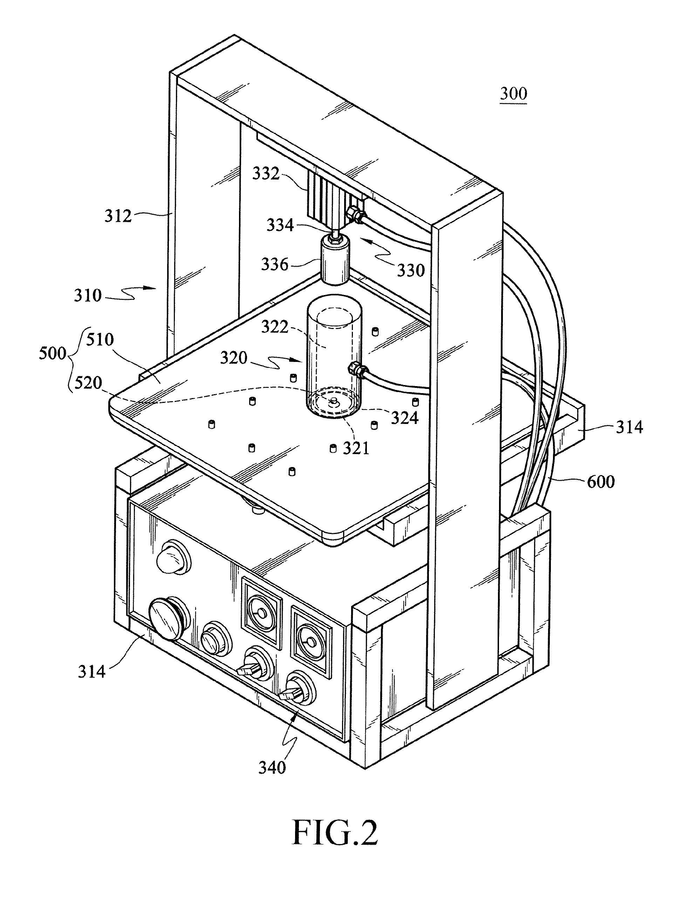

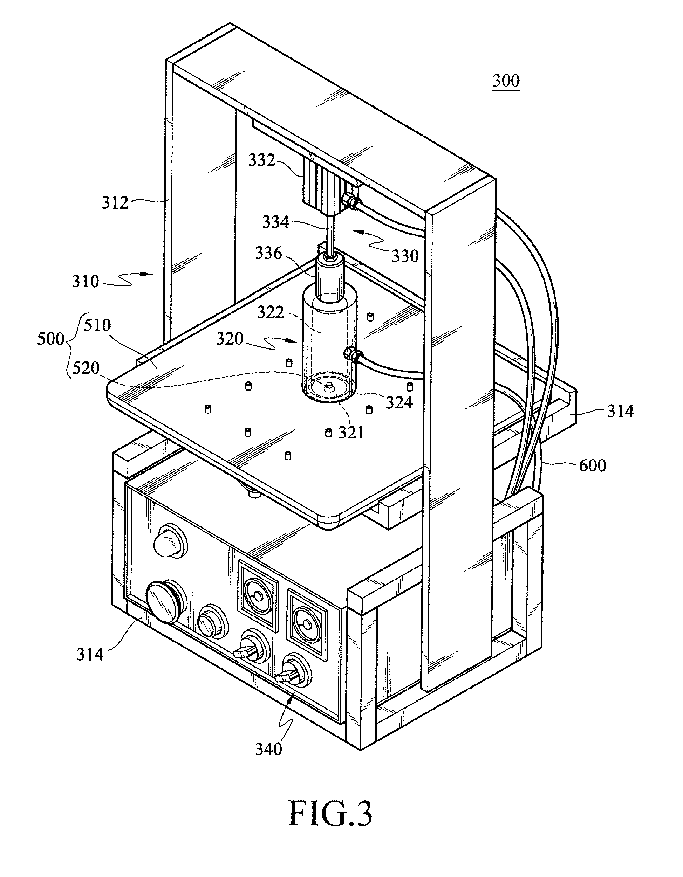

Referring to FIGs. 2, 3, and 4, when the air tightness performance of the outdoor antenna 500 is practically tested, firstly, the outdoor antenna 500 is placed on one of the stages 314 of the base 310, and the leakage-test pipe 320 covers at the testing position of the outdoor antenna 500, for example, at the position where the signal pins 520 are jointed to the main body 510, so as to be accommodated within the accommodation chamber 320. Meanwhile, the other end of the leakage-test pipe 320 corresponds to the pressing block 336 of the moving unit 330. Then, the testing staff operates the actuator 332 to force the pressing block 336 to move along the axial direction of the leakage-test pipe 320, so as to be pressed against the other end of the leakage-test pipe 320, such that the opening 320 is tightly jointed to the surface of the main body 510 for the outdoor antenna 500, and thus the accommodation chamber 332 becomes a closed space.

Then, the pressure source 700 is activated to turn on the control valve 740, such that the pressure generator 720 outputs the positive pressure to the accommodation chamber 322 of the leakage-test pipe 320 through the gas piping 600. According to the pressure state within the accommodation chamber 322 at this time, the detector 340 transmits signals obtained during testing to an output interface, so as to inform the message to the testing staff through an instrument or in the form of outputting texts. If the position where the signal pins 520 are jointed to the main body 510 can obstruct the air from entering into the accommodation chamber 322, that is, no slits or cracks are generated at the position where the signal pins 520 are jointed to the main body 510, and thus the air tightness is normal.

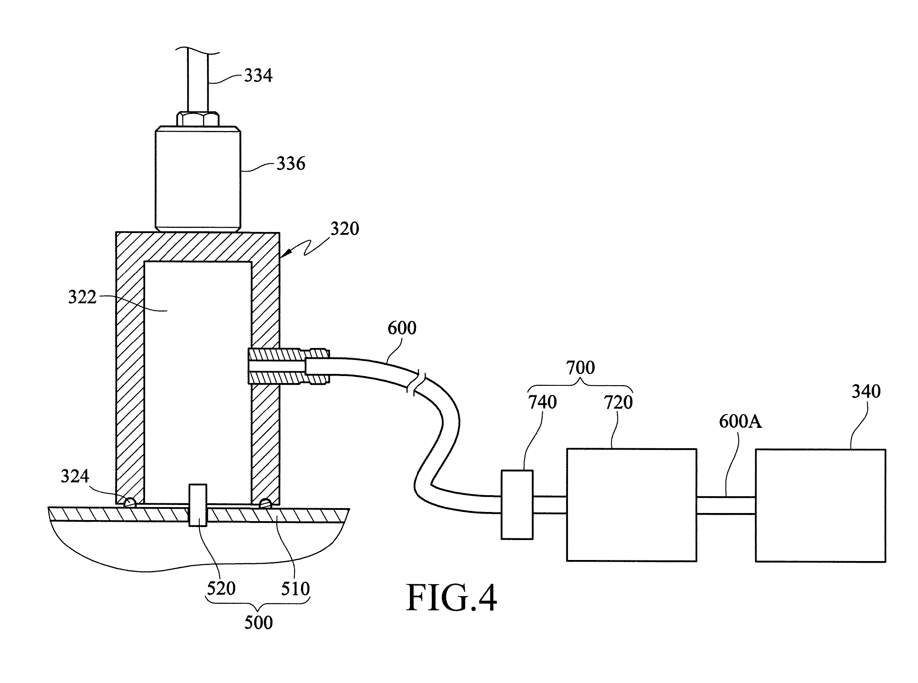

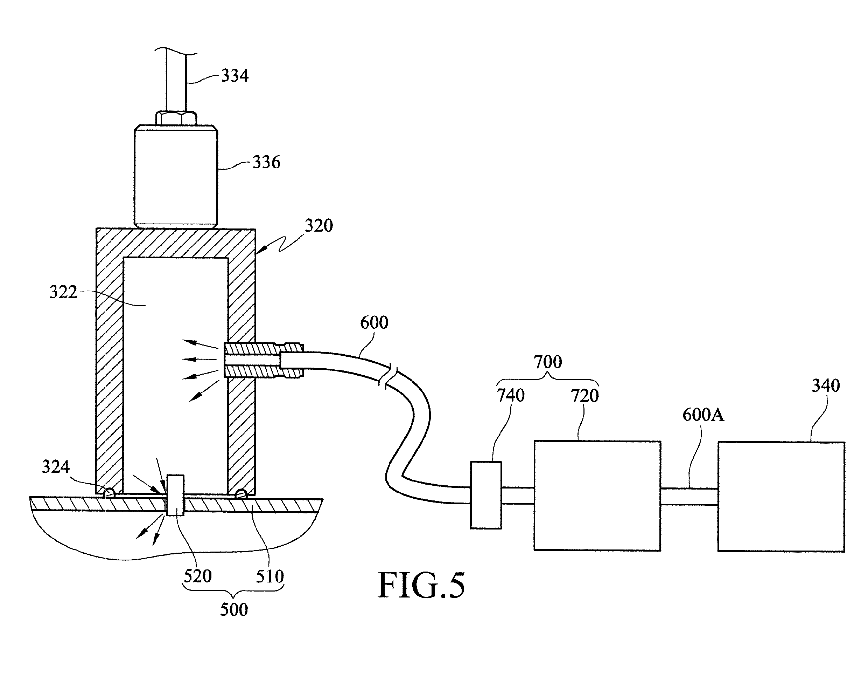

Please refer to FIGs. 4 and 5, if the air tightness performance is tested to be unqualified, that is, when the pressure generator 720 outputs the positive pressure to the accommodation chamber 322 of the leakage-test pipe 320 through the gas piping 600, if there are slits at the jointing position between the signal pin 520 and the main body 510, no matter how small the slits are, the air originally stored in the accommodation chamber 322 can escape out via the slits. (If a negative pressure is output to the accommodation chamber 322 to make the accommodation chamber 322 into a vacuum state, the environmental air can enter into the accommodation chamber 322 via the slits). The air input into the accommodation chamber 322 by the pressure generator 720 at this time may escape out via the slits, so the detector 340 detects the pressure state within the accommodation chamber 322, and outputs and displays the result signal of the testing failure through an output interface, so as to inform the testing staff, and thus, the testing staff can further analyze and strengthen the construction of the outdoor antenna 500 according to the information.

In addition, the proper time at which the pressure source 700 stops working may be tested through two manners. One manner is to set a pumping time value and the pumping time value is set into the control module. When the time at which the pressure generator 720 inputs the positive pressure reaches the input time value, the pressure generator 720 is turned off by the control module, and the gas path between the pressure generator 720 and the accommodation chamber 322 is cut off through the control value 740. Then, the detector 340 begins to detect the changing of the pressure within the accommodation chamber 322 as the time elapsed. In the other manner, a testing pressure value may also be set, that is, the detector 340 is used to continuously detect the pressure within the accommodation chamber 322. When the pressure changing magnitude falls within the testing pressure scope, the input of the positive pressure is stopped, and meanwhile, the changing of the pressure within the accommodation chamber 322 as the time elapsed is tested.

## Claims

1. An airtight tester, applicable for performing air tightness test at a testing position of an object to be tested, comprising:
a base, for placing the object to be tested;
a leakage-test pipe, having an accommodation chamber and an opening, wherein the accommodation chamber is connected to a gas piping, the gas piping is connected to a pressure source for outputting a pressure to the accommodation chamber, and the opening covers at the testing position of the object to be tested;
a moving unit, disposed on the base, and pressed at an outer edge of the leakage-test pipe, so as to make the accommodation chamber be jointed to a surface of the object to be tested; and
a detector, disposed on the base, and connected to the leakage-test pipe through the gas piping, so as to communicate to the accommodation chamber through the gas piping, for detecting a pressure state within the accommodation chamber.

2. The airtight tester as claimed in claim 1, wherein the base comprises a frame and a plurality of stages disposed on the frame, and the stages are used to carry the object to be tested and the detector.

3. The airtight tester as claimed in claim 2, wherein the moving unit comprises an actuator, a connecting lever, and a pressing block, the actuator is disposed on the frame, and two ends of the connecting lever are respectively connected to the actuator and the pressing block, the actuator outputs a power to move the pressing block, such that the pressing block reciprocates along an axial direction of the leakage-test pipe.

4. The airtight tester as claimed in claim 1, wherein the pressure source comprises a pressure generator, for outputting a pressure to the accommodation chamber.

5. The airtight tester as claimed in claim 4, wherein the pressure source comprises a control valve disposed between the pressure generator and the leakage-test pipe, for cutting off a gas path between the accommodation chamber and the pressure generator when the pressure generator stops working.

6. The airtight tester as claimed in claim 1, wherein a washer is disposed on the leakage-test pipe, for being tightly jointed to the surface of the object to be tested.
